# FASCICULE DE BREVET EUROPEEN

(11) **EP 3 992 083 B1**
(45) Date de publication et mention de la délivrance du brevet: **14.06.2023**
(21) Numéro de dépôt: 21205329.2
(22) Date de dépôt: 28.10.2021
(51) Int. Cl.: B64D 13/06, B64D 33/08, F02C 7/18

(54) **AÉRONEF COMPORTANT UN MOTEUR ET UN SYSTÈME DE REFROIDISSEMENT DU MOTEUR**
LUFTFAHRZEUG, DAS EINEN MOTOR UND EIN KÜHLSYSTEM FÜR DIESEN MOTOR UMFASST
AIRCRAFT INCLUDING AN ENGINE AND A SYSTEM FOR COOLING THE ENGINE

(30) Priorité: 30.10.2020 FR 2011127
(43) Date de publication de la demande: 04.05.2022
(73) Titulaire: AIRBUS OPERATIONS, 31060 Toulouse Cedex 9 (FR)
(72) Inventeur: ABELE, Antoine, 31060 Toulouse (FR); ZEBIAN, Maxime, 31060 Toulouse (FR)
(74) Mandataire: Cabinet Le Guen Maillet

(56) Documents cités:
- EP-A1- 3 401 223
- WO-A1-2020/183104
- FR-A1- 2 923 462
- US-A- 4 261 416

## Description

### DOMAINE TECHNIQUE

La présente invention concerne un aéronef comportant un moteur et un système de refroidissement du moteur, et plus particulièrement de refroidissement de divers composants et compartiments dudit moteur.

### ETAT DE LA TECHNIQUE ANTERIEURE

Un aéronef comporte classiquement un fuselage qui délimite une cabine pour des passagers et du personnel de bord. Dans la description, le terme « cabine » inclut non seulement la cabine dans laquelle sont assis les passagers, mais également le cockpit.

L'aéronef comporte également au moins un moteur du type turbopropulseur ou turboréacteur qui permet d'entraîner l'aéronef.

L'aéronef comporte également un système de conditionnement d'air qui prélève de l'air chaud au niveau du moteur, qui régule la température de l'air ainsi prélevé et qui envoie l'air ainsi régulé vers différentes parties de l'aéronef dont la cabine pour en réguler la température.

Le système de conditionnement comporte ainsi des échangeurs thermiques, des filtres, des canalisations, des vannes etc..., et il capte l'air chaud du moteur pour le traiter et le renvoyer vers sa destination, en particulier, vers la cabine.

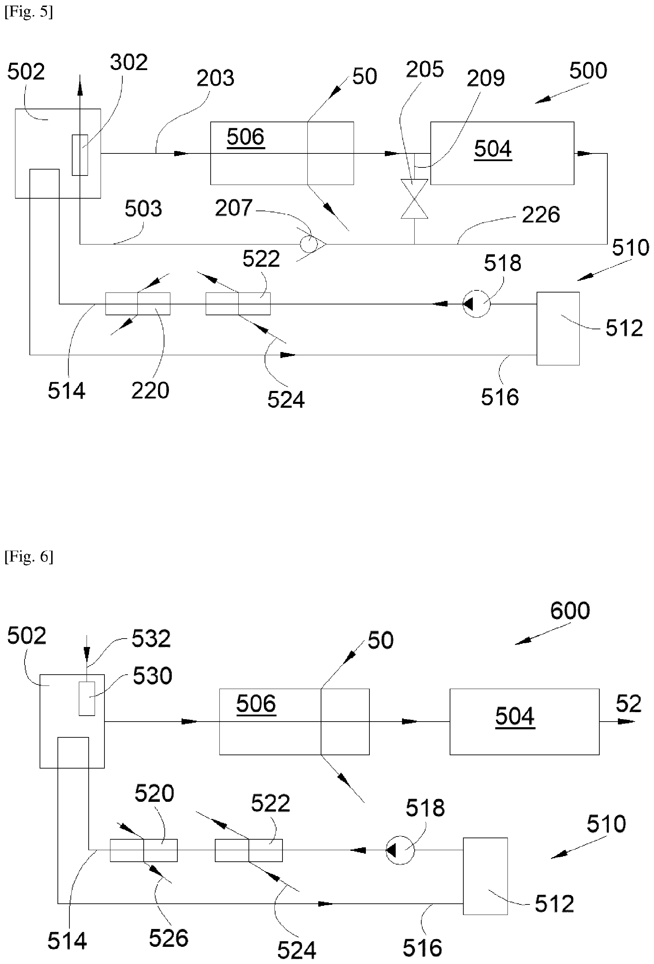

La Fig. 6 montre un schéma d'un tel aéronef 600 de l'état de la technique. L'aéronef 600 comporte un moteur 502, une cabine 504 et un système de conditionnement d'air 506. Le système de conditionnement d'air 506 n'est pas décrit plus avant, mais il comporte des moyens connus pour prélever l'air du moteur, pour réguler la température de cet air prélevé en fonction de la destination de cet air et pour envoyer l'air ainsi régulé vers sa destination.

L'air chaud est prélevé par exemple au niveau du compresseur du moteur 502 et il est canalisé vers le système de conditionnement d'air 506 puis en sortie du système de conditionnement d'air 506, il rejoint la cabine 504. L'air de la cabine 504 est ensuite éjecté vers l'extérieur 52 pour être renouvelé.

Lors de la traversée du système de conditionnement d'air 506, l'air est canalisé vers des échangeurs thermiques où il est refroidi par de l'air 50 prélevé par exemple au niveau d'un canal de soufflante du moteur 502 et/ou d'une écope du fuselage.

Pour gérer la température du moteur 502, il est connu d'utiliser un circuit d'huile 510 qui comporte un réservoir 512, une canalisation d'apport 514 qui canalise l'huile du réservoir 512 vers le moteur 502 et une canalisation retour 516 qui canalise l'huile du moteur 502 vers le réservoir 512. Pour entraîner l'huile en mouvement, il est prévu une pompe 518 qui est ici sur la canalisation d'apport 514.

Pour refroidir l'huile avant son arrivée au moteur 502, il est connu d'utiliser au moins un premier échangeur thermique 520 et au moins un deuxième échangeur thermique 522 agencés le long de la canalisation d'apport 514 à partir du moteur 502.

Dans le premier échangeur thermique 520, l'échange thermique s'effectue avec de l'air prélevé qui circule dans une canalisation d'air 526 avant d'être rejeté à l'extérieur. L'air est prélevé par exemple dans le canal de soufflante du moteur.

Dans le deuxième échangeur thermique 522, l'échange thermique s'effectue avec le carburant qui circule dans une canalisation de carburant 524 entre le réservoir de carburant et la chambre de combustion du moteur 502.

Le moteur 502 comporte classiquement une pluralité de compartiments 530, parmi lesquels on trouve :
- un compartiment de soufflante qui est autour de la soufflante, et
- un compartiment de compresseur qui englobe le compresseur et la zone de combustion.

Le compartiment de soufflante contient différents composants qui dégagent de la chaleur de par leur fonctionnement. Ces composants sont alors refroidis par une ventilation d'air prélevé par des écopes au niveau d'une nacelle entourant le moteur 502 et/ou par de l'huile circulant dans le compartiment de soufflante.

Le compartiment de compresseur contient également des composants qui dégagent de la chaleur de par leur fonctionnement et qui sont soumis au rayonnement thermique du moteur. Ces composants sont alors refroidis par une ventilation d'air prélevé par des écopes situées dans une veine secondaire du moteur 502 et/ou par de l'huile circulant dans le compartiment de compresseur et plus généralement circulant dans le moteur.

Chaque compartiment 530 est ainsi ventilé par un flux d'air 532 rejeté à l'extérieur.

En prélevant l'air dans le canal de soufflante pour refroidir l'huile et ventiler le moteur, les performances du moteur sont diminuées et la consommation de carburant augmente.

Il est donc nécessaire de trouver une installation qui permet de garantir de meilleures performances du moteur et une réduction de la consommation de carburant. EP 3 401 223 A1 divulgue un aéronef selon le préambule de la revendication 1.

### EXPOSE DE L'INVENTION

Un objet de la présente invention est de proposer un aéronef comportant un moteur et un système de refroidissement du moteur.

À cet effet, est proposé un aéronef comportant :
- un moteur,
- une cabine,
- un système de conditionnement d'air comportant des moyens adaptés à capter de l'air chaud du moteur, le traiter, réguler sa température et le renvoyer vers la cabine à travers une canalisation principale,
- une canalisation d'air canalisant l'air sortant de la cabine, l'aéronef étant caractérisé en ce qu'il comporte :
- des moyens adaptés à refroidir le moteur à partir de l'air ainsi prélevé par la canalisation d'air.

En prélevant l'air en sortie de la cabine, les performances du moteur sont améliorées et la consommation de carburant est réduite.

Selon un mode de réalisation particulier, le moteur comporte un compartiment, et les moyens adaptés à refroidir le moteur comportent un prolongement de la canalisation d'air qui canalise l'air prélevé dans la cabine directement vers ledit compartiment.

Avantageusement, l'aéronef comporte un clapet anti-retour disposé sur la canalisation d'air entre le compartiment et la cabine, où le clapet anti-retour empêche la circulation d'air du compartiment vers la cabine.

Selon un mode de réalisation particulier, les moyens adaptés à refroidir le moteur comportent :
- un circuit d'huile comportant un réservoir d'huile, une canalisation d'apport qui canalise l'huile du réservoir vers le moteur et une canalisation retour qui canalise l'huile du moteur vers le réservoir,
- un prolongement de la canalisation d'air, et
- un premier échangeur thermique arrangé pour effectuer un échange thermique entre la canalisation d'apport et le prolongement de la canalisation d'air.

Selon un mode de réalisation particulier, en sortie du premier échangeur thermique, le prolongement de la canalisation d'air rejette l'air à l'extérieur.

Selon un mode de réalisation particulier, le moteur comporte un compartiment, et en sortie du premier échangeur thermique, le prolongement de la canalisation d'air rejette l'air dans ledit compartiment.

Selon un mode de réalisation particulier, le moteur comporte un compartiment, et en amont du premier échangeur, la canalisation d'air comporte un prolongement de dérivation qui dévie une partie du flux d'air s'écoulant dans la canalisation d'air en sortie de la cabine vers le compartiment.

Avantageusement, l'aéronef comporte un clapet anti-retour disposé sur la canalisation d'air entre le premier échangeur thermique et la cabine, où le clapet anti-retour empêche la circulation d'air du premier échangeur thermique vers la cabine.

Avantageusement, l'aéronef comporte un échangeur additionnel agencé le long de la canalisation d'apport, et une canalisation de transfert qui capte l'air au niveau d'un canal de soufflante, lui fait traverser l'échangeur additionnel et le rejette vers l'extérieur, et en amont de l'échangeur additionnel, la canalisation de transfert est équipée d'un régulateur de débit commandé par la température de l'huile en sortie du premier échangeur.

Avantageusement, l'aéronef comporte une canalisation de contournement qui est disposée entre la canalisation principale au niveau de l'entrée de la cabine et la canalisation d'air au niveau de la sortie de la cabine et la canalisation de contournement est équipée d'une vanne qui peut être commandée en ouverture et en fermeture pour permettre ou interdire l'écoulement de l'air dans la canalisation de contournement.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une représentation schématique d'un aéronef selon l'invention,
[Fig. 3] est une représentation schématique d'un aéronef selon une première variante de l'invention,
[Fig. 4] est une représentation schématique d'un aéronef selon une deuxième variante de l'invention,
[Fig. 5] est une représentation schématique d'un aéronef selon une troisième variante de l'invention, et
[Fig. 6] est une représentation schématique d'un aéronef de l'état de la technique.

### EXPOSE DETAILLE DE MODES DE REALISATION

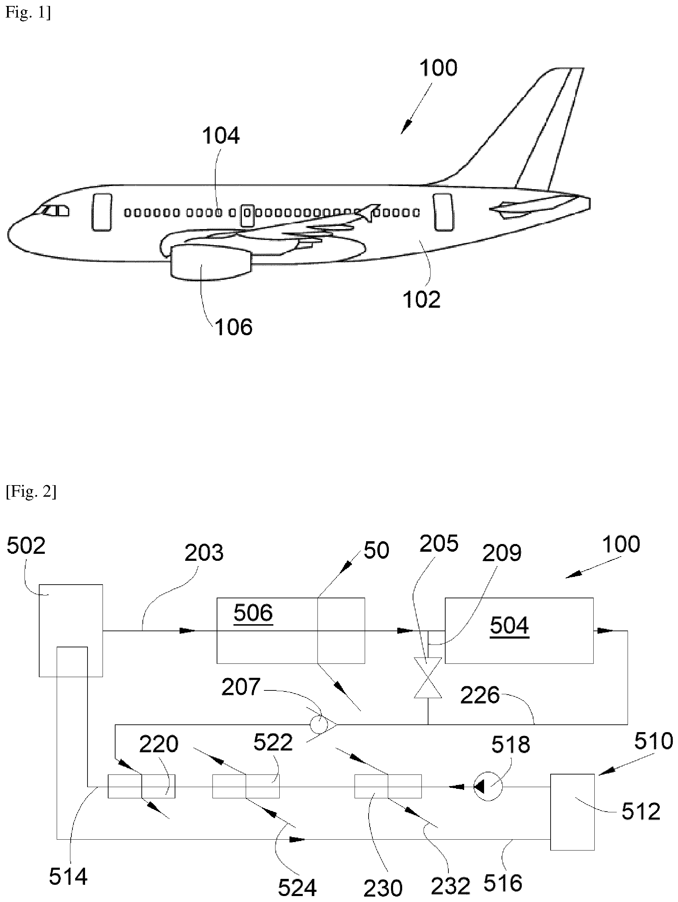

La Fig. 1 montre un aéronef 100 qui comporte un fuselage 102 à l'intérieur duquel est délimitée une cabine 104 incluant l'espace où sont assis les passagers et le cockpit.

L'aéronef 100 comporte également au moins un système de propulsion 106 comportant un moteur, en particulier un turboréacteur ou un turbopropulseur.

Les Figs. 2, 3, 4 et 5 montrent un aéronef 100, 300, 400, 500 selon différentes variantes de l'invention. Les références qui sont communes à l'aéronef 100, 300, 400, 500 selon l'invention et à l'aéronef 600 de l'état de la technique représentent les mêmes éléments.

L'aéronef 100, 300, 400, 500 comporte ainsi un moteur 502, une cabine 504 et un système de conditionnement d'air 506. Comme dans le cas de l'état de la technique, le système de conditionnement 506 comporte des moyens pour capter l'air chaud du moteur 502, en particulier du compresseur, pour le traiter et réguler sa température et le renvoyer vers sa destination, en particulier, vers la cabine 504. Ces moyens consistent par exemple en des échangeurs thermiques, des filtres, des canalisations, des vannes etc.

L'air capté par le système de conditionnement d'air 506 au niveau du moteur 502 est refroidi au niveau d'échangeurs thermiques par l'air 50 prélevé par exemple au niveau d'un canal de soufflante du moteur 502 et/ou d'une écope du fuselage.

L'air chaud du moteur 502 traverse ainsi le système de conditionnement d'air 506 et rejoint la cabine 504 par une canalisation principale 203.

Le moteur 502 comporte des compartiments 302 comme par exemple un compartiment de soufflante ou un compartiment de compresseur.

L'air de la cabine 504 est prélevé de la cabine 504 par une canalisation d'air 226 qui conduit l'air ainsi prélevé vers des moyens pour refroidir le moteur 502, soit à travers une ventilation dans au moins un compartiment dudit moteur 502, soit à travers un refroidissement de l'huile circulant dans le moteur 502.

Ainsi, en remplaçant l'air prélevé dans le canal de soufflante du moteur par l'air prélevé en sortie de la cabine, les performances du moteur sont moins dégradées et la consommation de carburant est moindre que dans le cas de l'état de la technique.

L'aéronef 100, 300, 400, 500 comporte également un circuit d'huile 510 qui comporte un réservoir 512 d'huile, une canalisation d'apport 514 qui canalise l'huile du réservoir 512 vers le moteur 502 et une canalisation retour 516 qui canalise l'huile du moteur 502 vers le réservoir 512. Pour entraîner l'huile en mouvement, il est prévu une pompe 518 qui est ici sur la canalisation d'apport 514.

Pour refroidir l'huile avant son arrivée au moteur 502, l'aéronef 100, 300, 400, 500 comporte à partir du moteur 502, un premier échangeur thermique 220, où un échange thermique s'effectue avec de l'air, et un deuxième échangeur thermique 522 agencé le long de la canalisation d'apport 514 entre le premier échangeur thermique 220 et le réservoir 512. Dans le deuxième échangeur thermique 522, l'échange thermique s'effectue avec le carburant qui circule dans une canalisation de carburant 524 entre le réservoir de carburant et la chambre de combustion du moteur 502.

Comme l'air provenant de la cabine 504 a une température plus faible que l'air provenant du canal de soufflante, le refroidissement de l'huile au niveau du premier échangeur thermique 220 est facilité par rapport à l'état de la technique, et ce premier échangeur 220 peut être réduit par rapport au premier échangeur 520 de l'état de la technique.

Dans le mode de réalisation de l'invention de la Fig. 5, la canalisation d'air 226 comporte un prolongement 503 qui canalise l'air prélevé dans la cabine 504 directement vers au moins l'un des compartiments 302 où il ventile ledit compartiment 302 et participe ainsi au refroidissement du moteur 502 avant d'être rejeté à l'extérieur.

Dans ce mode de réalisation, les moyens pour refroidir le moteur 502 sont alors constitués du prolongement 503 de la canalisation d'air 226.

Pour éviter que l'air reflue du premier échangeur thermique 220 vers la cabine 504 à travers la canalisation d'air 226, un clapet anti-retour 207 est disposé sur la canalisation d'air 226 entre le compartiment 302 et la cabine 504. Le clapet anti-retour 207 empêche la circulation d'air du compartiment 302 vers la cabine 504.

Pour éviter que l'air n'arrive pas au compartiment 302 lorsque la cabine 504 est dépressurisée, une canalisation de contournement 209 est disposée sur la canalisation principale 203 entre la sortie du système de conditionnement d'air 506 et l'entrée de la cabine 504 et elle rejoint la canalisation d'air 226 au niveau de la sortie de la cabine 504. La canalisation de contournement 209 est équipée d'une vanne, 205 comme par exemple une électrovanne, qui peut être commandée en ouverture et en fermeture pour permettre ou interdire l'écoulement de l'air dans la canalisation de contournement 209.

Dans les modes de réalisation de l'invention des Figs. 2, 3 et 4, l'air participant à l'échange thermique dans le premier échangeur thermique 220 sort de la cabine 504 par la canalisation d'air 226 qui comporte un prolongement qui canalise l'air prélevé dans la cabine 504 dans le premier échangeur thermique 220. Le premier échangeur thermique 220 est ainsi arrangé pour effectuer un échange thermique entre la canalisation d'apport 514 et le prolongement de la canalisation d'air 226.

Dans ces modes de réalisation, les moyens pour refroidir le moteur 502 sont alors constitués par le circuit d'huile 510, le premier échangeur thermique 220 et le prolongement de la canalisation d'air 226 qui canalise l'air prélevé dans la cabine 504 dans le premier échangeur thermique 220.

Dans le mode de réalisation de la Fig. 2, en sortie du premier échangeur thermique 220, le prolongement de la canalisation d'air 226 rejette l'air à l'extérieur.

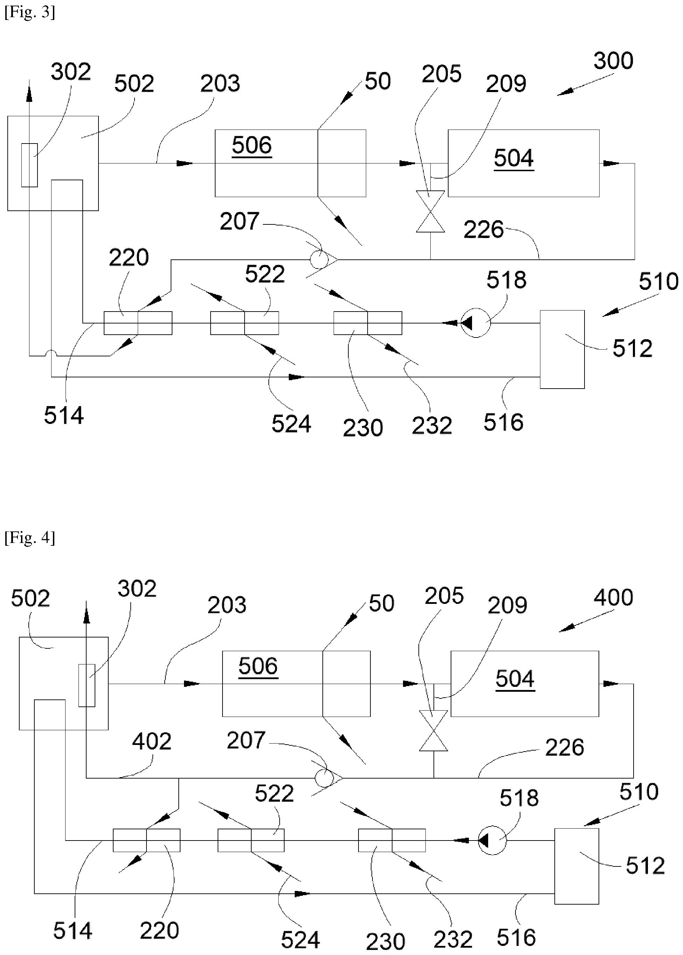

Dans le mode de réalisation de la Fig. 3, l'air sortant du premier échangeur thermique 220 est canalisé par le prolongement de la canalisation d'air 226 vers un compartiment 302 du moteur 502 comme par exemple le compartiment de compresseur ou le compartiment de soufflante.

Un tel arrangement évite ainsi de prélever de l'air du canal de soufflante, améliorant encore les performances du moteur 502. Ainsi, en sortie du premier échangeur thermique 220, le prolongement de la canalisation d'air 226 rejette l'air dans le compartiment 302 pour le ventiler et refroidir le moteur 502. En sortie du compartiment 302, l'air est rejeté vers l'extérieur.

Dans le mode de réalisation de la Fig. 4, la canalisation d'air 226 sortant de la cabine 504 est divisée en deux prolongements dont l'un, principal, canalise l'air pour alimenter le premier échangeur thermique 220 et dont l'autre 402, secondaire et de dérivation, canalise l'air vers le compartiment 302 du moteur 502 comme par exemple le compartiment de compresseur ou de soufflante.

Un tel arrangement évite ainsi de prélever de l'air du canal de soufflante, améliorant encore les performances du moteur 502. En sortie du compartiment 302, l'air est rejeté vers l'extérieur.

Ainsi l'aéronef 400 comporte, en amont du premier échangeur 220 par rapport au sens d'écoulement de l'air, un prolongement de dérivation 402 qui dévie une partie du flux d'air s'écoulant dans la canalisation d'air 226 en sortie de la cabine 504 vers le compartiment 302.

Dans les modes de réalisation des Figs. 2 à 4, l'aéronef 100, 300, 400 comporte un échangeur additionnel 230 agencé le long de la canalisation d'apport 514, où l'échange thermique s'effectue avec de l'air prélevé dans le canal de soufflante du moteur 502 à travers une canalisation de transfert 232 qui capte l'air au niveau du canal de soufflante, lui fait traverser l'échangeur additionnel 230 et le rejette vers l'extérieur. Le volume d'air prélevé dans le canal de soufflante est moindre que dans le cas de l'état de la technique du fait de la présence du premier échangeur 220 et permet donc d'avoir un échangeur réduit. La position de l'échangeur additionnel 230 le long de la canalisation d'apport 514 peut être différente.

En outre, en amont de l'échangeur additionnel 230, la canalisation de transfert 232 est équipée d'un régulateur de débit commandé par la température de l'huile en sortie du premier échangeur 220. A cette fin, en sortie du premier échangeur 220, la canalisation d'apport 514 est équipée d'un dispositif de mesure de température qui mesure la température de l'huile et l'aéronef 100, 300, 400 comporte une unité de contrôle qui est connectée au dispositif de mesure de température et au régulateur de débit et qui en fonction de la température va commander ledit régulateur de débit pour réguler au plus juste le prélèvement d'air dans le canal de soufflante afin que l'huile atteigne une température de consigne.

Dans les modes de réalisation des Figs. 2 à 4, il est également prévu un clapet anti-retour 207 sur la canalisation d'air 226 entre le premier échangeur thermique 220 et la cabine 504 et une canalisation de contournement 209.

Bien que l'invention décrite ci-dessus est décrite dans le cas d'un moteur sous une aile, elle s'applique de la même manière quelle que soit la position du moteur dans l'aéronef, comme par exemple sur le fuselage, dans le fuselage ou autres.

## Revendications

1. Aéronef (100, 300, 400, 500) comportant :
- un moteur (502),
- une cabine (504),
- un système de conditionnement d'air (506) comportant des moyens adaptés à capter de l'air chaud du moteur (502), le traiter, réguler sa température et le renvoyer vers la cabine (504) à travers une canalisation principale (203),
- une canalisation d'air (226) canalisant l'air sortant de la cabine (504), l'aéronef étant **caractérisé en ce qu'**il comporte:
- des moyens adaptés à refroidir le moteur (502) à partir de l'air ainsi prélevé par la canalisation d'air (226).

2. Aéronef (500) selon la revendication 1, **caractérisé en ce que** le moteur (502) comporte un compartiment (302), et **en ce que** les moyens adaptés à refroidir le moteur (502) comportent un prolongement (503) de la canalisation d'air (226) qui canalise l'air prélevé dans la cabine (504) directement vers ledit compartiment (302).

3. Aéronef (500) selon la revendication 2, **caractérisé en ce qu'**il comporte un clapet anti-retour (207) disposé sur la canalisation d'air (226) entre le compartiment (302) et la cabine (504), où le clapet anti-retour (207) empêche la circulation d'air du compartiment (302) vers la cabine (504).

4. Aéronef (100, 300, 400) selon la revendication 1, **caractérisé en ce que** les moyens adaptés à
refroidir le moteur (502) comportent :
- un circuit d'huile (510) comportant un réservoir (512) d'huile, une canalisation d'apport (514) qui canalise l'huile du réservoir (512) vers le moteur (502) et une canalisation retour (516) qui canalise l'huile du moteur (502) vers le réservoir (512),
- un prolongement de la canalisation d'air (226), et
- un premier échangeur thermique (220) arrangé pour effectuer un échange thermique entre la canalisation d'apport (514) et le prolongement de la canalisation d'air (226).

5. Aéronef (100) selon la revendication 4, **caractérisé en ce qu'**en sortie du premier échangeur thermique (220), le prolongement de la canalisation d'air (226) rejette l'air à l'extérieur.

6. Aéronef (300) selon la revendication 4, **caractérisé en ce que** le moteur (502) comporte un compartiment (302), et **en ce qu'**en sortie du premier échangeur thermique (220), le prolongement de la canalisation d'air (226) rejette l'air dans ledit compartiment (302).

7. Aéronef (400) selon la revendication 4, **caractérisé en ce que** le moteur (502) comporte un compartiment (302), et **en ce qu'**en amont du premier échangeur (220), la canalisation d'air (226) comporte un prolongement de dérivation (402) qui dévie une partie du flux d'air s'écoulant dans la canalisation d'air (226) en sortie de la cabine (504) vers le compartiment (302).

8. Aéronef (100, 300, 400) selon l'une des revendications 4 à 7, **caractérisé en ce qu'**il comporte un clapet anti-retour (207) disposé sur la canalisation d'air (226) entre le premier échangeur thermique (220) et la cabine (504), où le clapet anti-retour (207) empêche la circulation d'air du premier échangeur thermique (220) vers la cabine (504).

9. Aéronef (100, 300, 400) selon l'une des revendications 4 à 8, **caractérisé en ce qu'**il comporte un échangeur additionnel (230) agencé le long de la canalisation d'apport (514), et une canalisation de transfert (232) qui capte l'air au niveau d'un canal de soufflante, lui fait traverser l'échangeur additionnel (230) et le rejette vers l'extérieur, et **en ce qu'**en amont de l'échangeur additionnel (230), la canalisation de transfert (232) est équipée d'un régulateur de débit commandé par la température de l'huile en sortie du premier échangeur (220).

10. Aéronef (100, 300, 400, 500) selon l'une des revendications 1 à 9, **caractérisé en ce qu'**il comporte une canalisation de contournement (209) qui est disposée entre la canalisation principale (203) au niveau de l'entrée de la cabine (504) et la canalisation d'air au niveau de la sortie de la cabine (504) et **en ce que** la canalisation de contournement (209) est équipée d'une vanne (205) qui peut être commandée en ouverture et en fermeture pour permettre ou interdire l'écoulement de l'air dans la canalisation de contournement (209).

## Patentansprüche

1. Luftfahrzeug (100, 300, 400, 500), das Folgendes umfasst:
- einen Motor (502),
- eine Kabine (504),
- eine Klimaanlage (506), die Mittel umfasst, die dazu angepasst sind, warme Luft des Motors (502) aufzunehmen, sie aufzubereiten, ihre Temperatur zu regeln und sie durch eine Hauptleitung (203) in die Kabine (504) zu führen,
- eine Luftleitung (226), die die aus der Kabine (504) austretende Luft leitet, wobei das Luftfahrzeug **dadurch gekennzeichnet ist, dass** es Folgendes umfasst:
- Mittel, die dazu angepasst sind, den Motor (502) mit Hilfe der so durch die Luftleitung (226) entnommenen Luft zu kühlen.

2. Luftfahrzeug (500) nach Anspruch 1, **dadurch gekennzeichnet, dass** der Motor (502) eine Kammer (302) umfasst und dass die Mittel, die zum Kühlen des Motors (502) angepasst sind, eine Verlängerung (503) der Luftleitung (226) umfassen, die die aus der Kabine (504) entnommene Luft direkt zu der Kammer (302) leitet.

3. Luftfahrzeug (500) nach Anspruch 2, **dadurch gekennzeichnet, dass** es eine Rückschlagklappe (207) umfasst, die zwischen der Kammer (302) und der Kabine (504) in der Luftleitung (226) angeordnet ist, wobei die Rückschlagklappe (207) die Zirkulation von Luft von der Kammer (302) zu der Kabine (504) verhindert.

4. Luftfahrzeug (100, 300, 400) nach Anspruch 1, **dadurch gekennzeichnet, dass** die Mittel, die zum Kühlen des Motors (502) angepasst sind, Folgendes umfassen:
- einen Ölkreislauf (510), der einen Ölbehälter (512), eine Zufuhrleitung (514), die das Öl von dem Behälter (512) zu dem Motor (502) leitet, und eine Rückleitung (516), die das Öl von dem Motor (502) zu dem Behälter (512) leitet, umfasst,
- eine Verlängerung der Luftleitung (226) und
- einen ersten Wärmetauscher (220), der dazu angeordnet ist, einen Wärmeaustausch zwischen der Zufuhrleitung (514) und der Verlängerung der Luftleitung (226) vorzunehmen.

5. Luftfahrzeug (100) nach Anspruch 4, **dadurch gekennzeichnet, dass** die Verlängerung der Luftleitung (226) die Luft am Ausgang des ersten Wärmetauschers (220) nach außen ausstößt.

6. Luftfahrzeug (300) nach Anspruch 4, **dadurch gekennzeichnet, dass** der Motor (502) eine Kammer (302) umfasst und dass die Verlängerung der Luftleitung (226) die Luft am Ausgang des ersten Wärmetauschers (220) in die Kammer (302) ausstößt.

7. Luftfahrzeug (400) nach Anspruch 4, **dadurch gekennzeichnet, dass** der Motor (502) eine Kammer (302) umfasst und dass die Luftleitung (226) stromaufwärts des ersten Tauschers (220) eine Abzweigungsverlängerung (402) umfasst, die einen Teil des Luftstroms, der am Ausgang der Kabine (504) in die Luftleitung (226) strömt, zu der Kammer (302) umleitet.

8. Luftfahrzeug (100, 300, 400) nach einem der Ansprüche 4 bis 7, **dadurch gekennzeichnet, dass** es eine Rückschlagklappe (207) umfasst, die zwischen dem ersten Wärmetauscher (220) und der Kabine (504) in der Luftleitung (226) angeordnet ist, wobei die Rückschlagklappe (207) die Zirkulation von Luft von dem ersten Wärmetauscher (220) zu der Kabine (504) verhindert.

9. Luftfahrzeug (100, 300, 400) nach einem der Ansprüche 4 bis 8, **dadurch gekennzeichnet, dass** es einen zusätzlichen Tauscher (230), der entlang der Zufuhrleitung (514) angeordnet ist, und eine Transferleitung (232), die die Luft aus einem Gebläsekanal aufnimmt, sie den zusätzlichen Tauscher (230) durchqueren lässt und sie nach außen ausstößt, umfasst, und dass die Transferleitung (232) stromaufwärts des zusätzlichen Tauschers (230) mit einem Volumenregler ausgestattet ist, der durch die Temperatur des Öls am Ausgang des ersten Tauschers (220) gesteuert wird.

10. Luftfahrzeug (100, 300, 400, 500) nach einem der Ansprüche 1 bis 9, **dadurch gekennzeichnet, dass** es eine Umgehungsleitung (209) umfasst, die zwischen der Hauptleitung (203) im Bereich des Eingangs in die Kabine (504) und der Luftleitung im Bereich des Ausgangs aus der Kabine (504) angeordnet ist, und dass die Umgehungsleitung (209) mit einem Ventil (205) ausgestattet ist, das in die Öffnungs- oder Schließstellung gebracht werden kann, um das Strömen der Luft in der Umgehungsleitung (209) zu gestatten oder zu verbieten.

## Claims

1. Aircraft (100, 300, 400, 500) having:
- an engine (502),
- a cabin (504),
- an air conditioning system (506) having means adapted to collect hot air from the engine (502), to treat it, to regulate its temperature and to send it towards the cabin (504) via a main line (203),
- an air line (226) channelling the air leaving the cabin (504),
the aircraft being **characterized in that** it comprises
- means adapted to cool the engine (502) using the air thus drawn off by the air line (226).

2. Aircraft (500) according to Claim 1, **characterized in that** the engine (502) comprises a compartment (302), and **in that** the means adapted to cool the engine (502) comprise an extension (503) of the air line (226) that channels the air drawn off from the cabin (504) directly towards said compartment (302).

3. Aircraft (500) according to Claim 2, **characterized in that** it comprises a non-return valve (207) disposed on the air line (226) between the compartment (302) and the cabin (504), wherein the non-return valve (207) prevents the circulation of air from the compartment (302) towards the cabin (504).

4. Aircraft (100, 300, 400) according to Claim 1, **characterized in that** the means adapted to cool the engine (502) comprises:
- an oil circuit (510) having an oil reservoir (512), a supply line (514) that channels the oil from the reservoir (512) towards the engine (502) and a return line (516) that channels the oil from the engine (502) towards the reservoir (512),
- an extension of the air line (226), and
- a first heat exchanger (220) arranged so as to exchange heat between the supply line (514) and the extension of the air line (226).

5. Aircraft (100) according to Claim 4, **characterized in that**, at the outlet of the first heat exchanger (220), the extension of the air line (226) rejects the air to the outside.

6. Aircraft (300) according to Claim 4, **characterized in that** the engine (502) comprises a compartment (302), and **in that**, at the outlet of the first heat exchanger (220), the extension of the air line (226) rejects the air into said compartment (302).

7. Aircraft (400) according to Claim 4, **characterized in that** the engine (502) has a compartment (302), and **in that**, upstream of the first heat exchanger (220), the air line (226) has a diversion extension (402) that deviates a part of the stream of air flowing in the air line (226) leaving the cabin (504) towards the compartment (302).

8. Aircraft (100, 300, 400) according to one of the Claims 4 to 7, **characterized in that** said aircraft has a non-return valve (207) disposed on the air line (226) between the first heat exchanger (220) and the cabin (504), wherein the non-return valve (207) prevents the circulation of air from the first heat exchanger (220) towards the cabin (504).

9. Aircraft (100, 300, 400) according to one of the Claims 4 to 8, **characterized in that** it comprises an additional heat exchanger (230) arranged along the supply line (514), and a transfer line (232) that collects the air at a fan duct, makes it pass through the additional heat exchanger (230) and rejects it towards the outside, and **in that**, upstream of the additional heat exchanger (230), the transfer line (232) is equipped with a flow rate regulator controlled by the temperature of the oil at the outlet of the first heat exchanger (220).

10. Aircraft (100, 300, 400, 500) according to one of the Claims 1 to 9, **characterized in that** it comprises a bypass line (209) that is disposed between the main line (203) at the inlet of the cabin (504) and the air line at the outlet of the cabin (504) and **in that** the bypass line (209) is equipped with a valve (205) that can be commanded to open and close so as to allow or prevent the flow of the air in the bypass line (209).
